# EUROPEAN PATENT SPECIFICATION

(11) **EP 2 383 643 B1**
(45) Date of publication and mention of the grant of the patent: **04.09.2019**
(21) Application number: 11163714.6
(22) Date of filing: 26.04.2011
(51) Int. Cl.: G06F 3/12

(54) **Information processing apparatus, information processing method and program**
Informationsverarbeitungsvorrichtung, Informationsverarbeitungsverfahren und Programm
Appareil de traitement d'informations, procédé et programme de traitement d'informations

(30) Priority: 30.04.2010 JP 2010105435
(43) Date of publication of application: 02.11.2011
(73) Proprietor: CANON KABUSHIKI KAISHA, Ohta-ku Tokyo 146-8501 (JP)
(72) Inventor: Chiba, Kazumi, Ohta-ku Tokyo (JP)
(74) Representative: Uffindell, Christine Helen

(56) References cited:
- US-A1- 2003 189 727
- US-A1- 2009 051 947
- US-A1- 2009 080 025

## Description

### BACKGROUND OF THE INVENTION

### Field of the Invention

The present invention relates to an information processing apparatus, an information processing method, and a program.

### Description of the Related Art

In recent years, the necessity of one-to-one marketing has attracted attention, because of a variety of commercial-goods and consumer orientation toward customized service due to widespread use of the Internet. This method is very effective in increasing customer satisfaction, and developing and retaining customers.

One-to-one marketing is a type of database (DB) marketing, in which generation of a database of personal attribute information such as age, gender, interest, taste and purchase history, analysis of contents of the database, and proposals according to customers' needs are performed. Typical and practical methods thereof include variable data printing (below referred to as VDP).

According to the VDP, a variable region is provided to customize a document corresponding to each customer. While data in the variable region is supplied from a DB or the like, a customized VDP document is output. The VDP document is generated by a VDP application having a function of editing the VDP document. When a printing instruction is given to the VDP document edited by the VDP application, contents according to rules are added to the variable region to generate print data. Then, job control language data is added to the print data to generate a print job. The print job is issued to a printing apparatus. Then, the print data is printed out by the printing apparatus.

A personalized print markup language (PPML) is one of VDP language formats for efficiently implementing printing using data in a variable region (i.e., variable data) and data in a fixed region (i.e., reusable objects) . The VDP application generates and outputs a print job using print data described in PPML. Hereinafter, data described in PPML to be used in generating a print job according to VDP is referred to as PPML data.

A plurality of "records" can be described as print data of a single print job using PPML data. The "record" designates an item that defines one unit of print data in a DB to be referred to when a print job is generated by the VDP application. The record can represent any of, e.g., a customer, an office, and a district.

On the other hand, if a job ticket, such as job definition format (JDF) data, and a print job are paired off and transmitted to post-processes, post-processing such as stapling or punching can be designated corresponding to each record.

However, in a print job using a language format, such as PPML, according to which a method of describing an element corresponding to one record is not clearly defined, the composing elements of the record and the print data cannot be associated with one another. Accordingly, processing in units of records cannot be performed using a job ticket.

A technique relating to record separation provided between PPML records has been developed to analyze a print job according to VDP which includes a plurality of records and to associate, according to a result of analysis, each record with a print page corresponding thereto. Japanese Patent Application Laid-Open No. 2009-53860 discusses a technique for dividing records by analyzing a reference cycle (in units of pages or in units of documents) of reusable objects, and drawing positions of variable data.

However, the technique discussed in Japanese Patent Application Laid-Open No. 2009-53860 cannot be applied to cases where reference to the reusable object is not performed at regular intervals in units of pages (or documents), and where the drawing positions of the variable data vary with records. That is, this technique is applied to limited cases. In print jobs described in the format such as PPML, because there are no clear rules for determining what element corresponds to a record, processing described in a job ticket, which is to be performed in units of records, cannot be executed.

US2003/189727 describes a method of organizing a VDP print job containing a plurality of documents that are to be printed.

US2009/080025 details processing a page description language (PDL) data stream lacking page independence. PDL job producers, shared resources and page boundaries are detected following a single parsing pass. An organized representation is then produced without rearranging data and resources in the PDL job.

### SUMMARY OF THE INVENTION

According to a first aspect of the present invention, there is provided an information processing apparatus as specified in claims 1 to 5. According to a second aspect of the present invention, there is provided a method as specified in claim 6. According to a third aspect of the present invention, there is provided a program as specified in claim 7. According to a further aspect of the present invention, there is provided a storage medium as specified in claim 8.

According to the present invention, in a print job in which it is not clearly determined what element corresponds to a record level, processing in units of records can be performed.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.
Fig. 1 illustrates an example of PPML data.
Fig. 2 is a conceptual diagram illustrating a DB used by a VDP application.
Fig. 3 is a conceptual diagram illustrating the VDP application.
Fig. 4 is a block diagram illustrating an example of a fundamental configuration of a variable print system.
Fig. 5 is a block diagram illustrating an example of a control apparatus.
Fig. 6 illustrates a module configuration of a hot folder.
Fig. 7 is a flowchart illustrating processes of record level estimation, display, selection, and notification.
Fig. 8 is a flowchart illustrating details of a process to be performed in step S702 illustrated in Fig. 7.

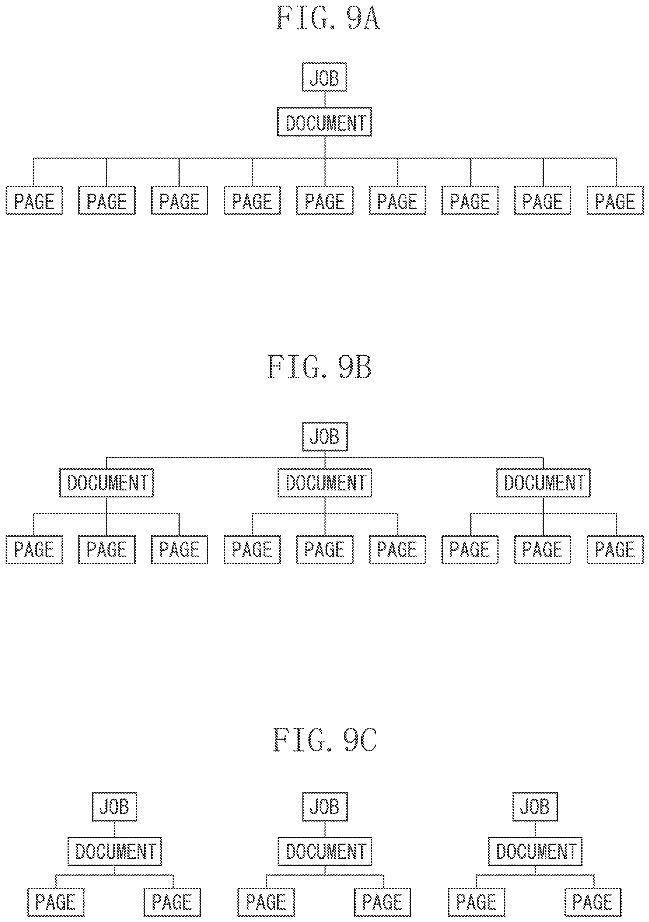

Fig. 9A is a conceptual diagram illustrating a process of extracting record level candidate elements from PPML data in which only one JOB element and only one DOCUMENT element are present, and a plurality of PAGE elements are present. Fig. 9B is a conceptual diagram illustrating a process of extracting record level candidate elements from PPML data in which only one JOB element is present and a plurality of DOCUMENT elements are present. Fig. 9C is a conceptual diagram illustrating a process of extracting record level candidate elements from PPML data in which a plurality of JOB elements are present, and only one DOCUMENT element is present corresponding to each of the JOB elements.
Fig. 10 (including Fig. 10A and Fig. 10B) is a flowchart illustrating details of a process to be performed in step S803 illustrated in Fig. 8.
Fig. 11 is a conceptual diagram illustrating a parse tree (i.e., a tag tree structure) obtained by parsing PPML data.
Fig. 12 is a conceptual diagram illustrating division of the parse tree illustrated in Fig. 11 by employing JOB elements as root nodes.
Fig. 13 is a conceptual diagram illustrating division of the parse tree illustrated in Fig. 11 by employing DOCUMENT elements as root nodes.
Fig. 14 is a conceptual diagram illustrating division of the parse tree illustrated in Fig. 11 by employing PAGE elements as root nodes.
Fig. 15 is a flowchart illustrating details of a process performed in step S805 illustrated in Fig. 8.
Fig. 16 is a conceptual diagram illustrating a record level setting screen.
Fig. 17A is a conceptual diagram illustrating an example of a record level setting screen on which a print image of PPML data is displayed in units of JOB elements. Fig. 17B is a conceptual diagram illustrating an example of a record level setting screen on which a print image of the same PPML data illustrated in Fig. 17A is displayed in units of DOCUMENT elements.
Fig. 18A is a conceptual diagram illustrating an example of a record level setting screen on which a print image of PPML data is displayed in units of DOCUMENT elements. Fig. 18B is a conceptual diagram illustrating an example of a record level setting screen on which a print image of the same PPML data illustrated in Fig. 18A is displayed in units of PAGE elements.
Fig. 19 is a flowchart illustrating a process of selecting a record level by a user.
Fig. 20 is a conceptual diagram illustrating the description of PPML data when post-processes are notified of a record level using metadata.

### DESCRIPTION OF THE EMBODIMENTS

Various exemplary embodiments, features, and aspects of the invention will be described in detail below with reference to the drawings.

### <Description of PPML Data>

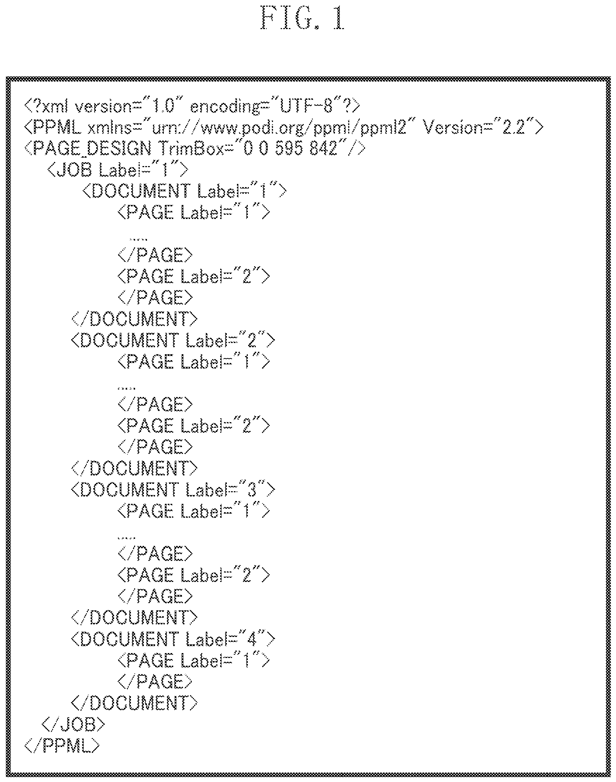

Fig. 1 illustrates an example of PPML data. As illustrated in Fig. 1, the PPML data has a hierarchical structure based on Extensible Markup Language (XML) in which a plurality of documents and a document group obtained by integrating documents with one another can be stored. The hierarchical structure includes a PPML element placed on the topmost level, and a JOB element (or DOCUMENT_SET, hereinafter sometimes referred to simply as JOB) which is placed at the next level below the PPML element and defines a document group. The JOB element includes a DOCUMENT element which is placed at the next level below the JOB element and defines a document. The DOCUMENT element includes a PAGE element which is placed at the next level below the DOCUMENT element and defines a logical page.

A single print job can include a plurality of JOB elements, a plurality of DOCUMENT elements, and a plurality of PAGE elements. More specifically, a single print job can include a plurality of JOB elements. A single JOB element can include a plurality of DOCUMENT elements. A single DOCUMENT element can include a plurality of PAGE elements.

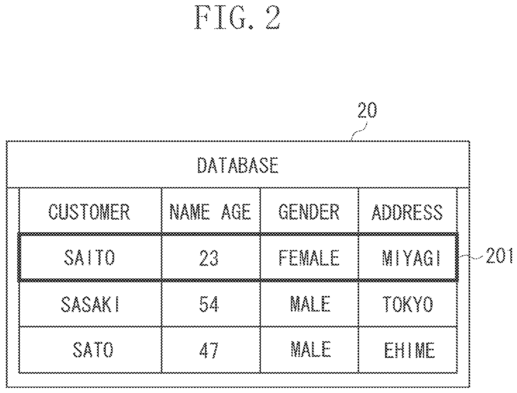

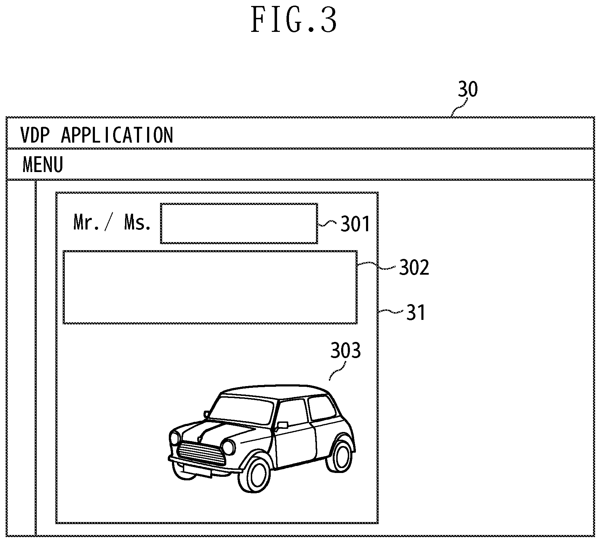

Generation of a VDP print job with reference to a DB by a VDP application is described below with reference to Figs. 2 and 3. Fig. 2 is a conceptual diagram illustrating a DB 20 used by the VDP application. Fig. 2 illustrates an example of a customer DB. A record 201 represents data of a single customer. In this example, it is assumed that each record corresponds to a customer.

Fig. 3 is a conceptual diagram illustrating a VDP application 30. The VDP application 30 has a function of editing a VDP document 31. The VDP application 30 arranges, according to an instruction from a user, variable regions 301 and 302 and a fixed region 303 in the VDP document 31. Items of the DB can be assigned to the variable regions. In this example, a customer name is assigned to the variable region 301. An address is assigned to the variable region 302. When receiving a printing instruction from a user, the VDP application 30 refers to the customer DB and generates a VDP document using customer name data of each record in the variable region 301, and also using address data of each record in the variable region 302. Thus, the VDP application 30 outputs descriptions of a plurality of records, the number of which is that of customers, as a single print job.

Any of the JOB element, the DOCUMENT element and the PAGE element can describe data of one record. If a certain element corresponds to one record, the level of the element is referred to as a record level. For example, if the contents from the start to the end of a single DOCUMENT element correspond to one record, the level of the DOCUMENT element is the record level. Similarly, if the contents from the start to the end of a single JOB element correspond to one record, the record level is the level of the JOB element. If the contents from the start to the end of a single PAGE element correspond to one record, the record level is the level of the PAGE element. As is understood from the above description, a record is a unit of repetition of variable data.

### <Fundamental Configuration>

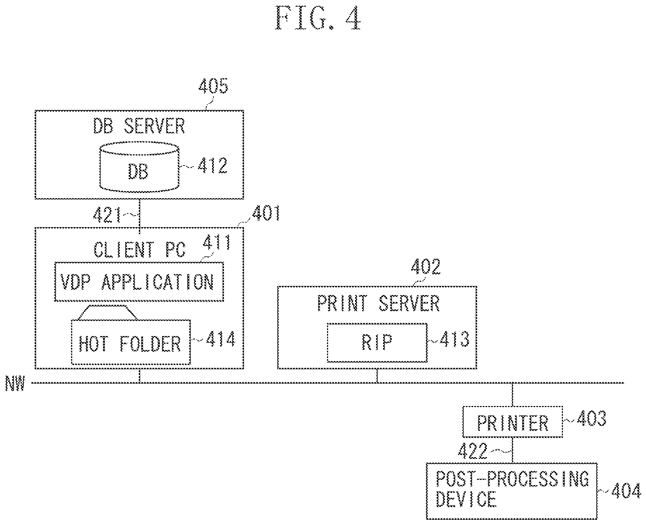

Fig. 4 is a block diagram illustrating an example of the fundamental configuration of a variable print system. The variable print system according to the present exemplary embodiment includes a client personal computer (PC) 401, a print server 402, a printer 403, a post-processing device 404, and a DB server 405. The printer 403, the print server 402, and the client PC 401 are connected to one another via a network (NW) and can be communicated with one another. The DB server 405 is connected to the client PC 401 by a communication path 421. The post-processing device 404 is connected to the printer 403 by a communication path 422.

The client PC 401 has functions of editing application files and issuing a printing instruction. The client PC 401 also has functions of storing and operating applications for controlling printers and print jobs managed in the print server 402.

A VDP application 411 and a hot folder 414 operate on the client PC 401. The hot folder 414 is a virtual folder including print condition setting information and other types of information such as print request information as attributes. A plurality of hot folders 414 can be generated in a memory, such as a hard disk provided to the client PC 401. The VDP application 411 acquires DB data from a DB 412 via the communication path 421 by transmitting, to the DB server 405 via the communication path 421, an acquisition request for data designated as data in the variable region.

The VDP application 411 generates a VDP print job using the acquired DB data and the VDP document format such as PPML. Hereinafter, a description is given by assuming that a VDP print job is output in PPML. However, PPML is only an example. The print job can be described in other language formats. The hot folder 414 is used to monitor input of a print job from the VDP application 411, to execute a process defined by the hot folder 414 with respect to the print job, and to transmit data to the print server via the network.

The print server 402 controls the input print job and the printer 403 connected thereto via the network. The print server 402 can control the pause, change of setting, and resume of a print job, or the duplication, movement, and deletion of a print job.

The print server 402 receives the PPML data as input data. Data included in print data is analyzed by a raster image processor (RIP) 413 to generate bit-map image data. This processing is referred to as "RIP processing". At that time, the client PC 401 transmits a job ticket to the print server 402 together with the PPML data. Then, the print server 402 controls the printer 403 and the post-processing device 404 based on the job ticket.

The job ticket according to the present exemplary embodiment designates, e.g., job definition format (JDF) data describing job operating instructions and includes information concerning post-processing such as stapling and punching. The job ticket is sometimes output from the VDP application 411 together with the PPML data. Alternatively, the job ticket is sometimes set by an external system such as a management information system (MIS).

The printer 403 has a printing function. The post-processing device 404 is connected to the printer 403 by the communication path 422 and can be controlled by the print server 402. The post-processing device 404 performs post-processing according to print job control from the print server 402. The print server 402, the printer 403, and the post-processing device 404 are examples of a post-processing unit for performing post-processing subsequent to a print job.

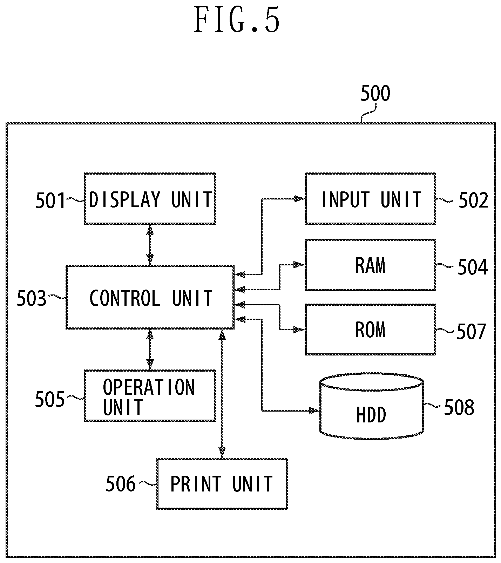

Fig. 5 is a block diagram illustrating an example of a control apparatus. A control apparatus 500 according to the present exemplary embodiment operates on the client PC 401. The control apparatus 500 illustrated in Fig. 5 includes a display device unit 501, an input unit 502, a control unit 503, a random access memory (RAM) 504, an operation unit 505, a print unit 506, a read-only memory (ROM) 507, and a hard disk drive (HDD) 508. The display device unit 501 is a display device such as a cathode ray tube (CRT) or a liquid crystal monitor. The input unit 502 corresponds to a keyboard, a pointing device such as a mouse, or the like.

The control unit 503 is a central processing unit (CPU). The control unit 503 controls the entire apparatus according to a control program stored in the RAM 504. The ROM 507 stores computer programs to be executed by the control unit 503. The HDD 508 is configured by a hard disk and a driving unit which reads and writes data from and to the hard disk. The HDD 508 stores DBs, documents, image data and the like. The DBs include one or more DBs to be used to generate variable data such as customer data.

The RAM 504 is a nonvolatile memory and stores various programs and data files loaded from the ROM 507 and the HDD 508. Programs stored in the RAM 504 read and write the contents of data stored in the RAM 504, receive input from the input unit 502, and display data in the display device unit 501.

The operation unit 505 receives input process data from the input unit 502 and transmits the received data to the control unit 503. The print unit 506 transmits data to the printer 403 via the print server 402 through the network and the like.

### <Module Configuration>

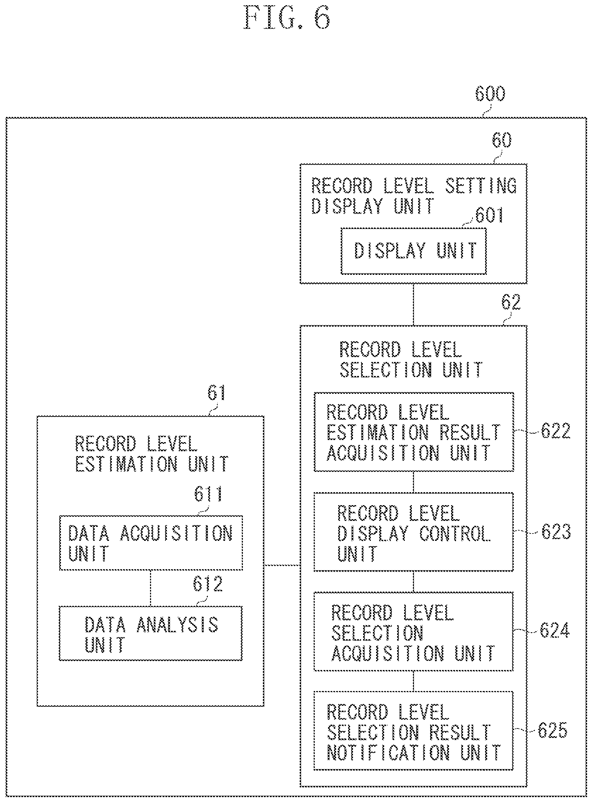

Fig. 6 illustrates a module configuration of the hot folder 414. An information processing apparatus 600 operates on the control apparatus 500 which is an example of an information processing apparatus (computer). Execution processing by each module is controlled by the control unit 503 illustrated in Fig. 5. The information processing apparatus 600 includes a record level setting display unit 60, a record level estimation unit 61, and a record level selection unit 62.

The record level setting display unit 60 includes a display unit 601 and acquires information concerning display, transmits a displaying instruction to the control unit 503 and controls display performed by the display device unit 501. The record level estimation unit 61 acquires and analyzes the PPML data. The record level estimation unit 61 includes a data acquisition unit 611 and a data analysis unit 612. The data acquisition unit 611 monitors the input of the PPML data from the VDP application and acquires the PPML data. The data analysis unit 612 analyzes the PPML data acquired by the data acquisition unit 611 and estimates a record level.

The record level selection unit 62 receives selection input to the operation unit 505 by a user from the input unit 502. Then, the record level selection unit 62 acquires a record level selected by the user. Hereinafter, a sequence of internal processes performed by the operation unit 505 to receive the selection of a record level input from the input unit 502 by the user is referred to as the "user's selection of the record level". The record level selection unit 62 includes a record level estimation result acquisition unit 622, a record level display control unit 623, a record level selection acquisition unit 624, and a record level selection result notification unit 625.

The record level estimation result acquisition unit 622 acquires a result of estimating the record level from the record level estimation unit 61. The record level display control unit 623 transfers the result of estimating the record level acquires by the record level estimation result acquisition unit 622 to the display unit 601. The record level display control unit 623 controls display performed by the display device unit 501 and causes the display device unit 501 to display a record level setting screen. When a user selects a record level via a record level selection radio button which will be described below, the record level display control unit 623 controls the display unit to display contents of a page of the print job in a page display region, which will be described below, at the selected record level. The record level setting screen is described below.

The record level selection acquisition unit 624 receives the user's selection of the record level and acquires the selected record level. The record level selection result notification unit 625 notifies the post-processing device 404 via the print server 402 of the result of selecting the record level acquired by the record level selection acquisition unit 624. A record level notification method will be described below.

### <Overall Flow>

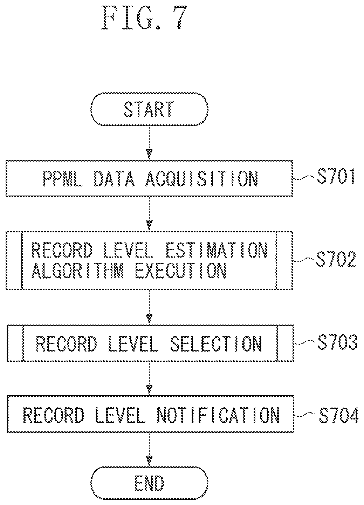

Fig. 7 is a flowchart illustrating processes of record level estimation, display, selection, and notification according to the present exemplary embodiment. Fig. 7 illustrates a process performed since the information processing apparatus 600 according to the present exemplary embodiment receives a print job from the VDP application 411 until the information processing apparatus 600 issues, to the printer 403 via the print server 402, an instruction to perform a print control operation in units of records.

In step S701, in the information processing apparatus 600, the data acquisition unit 611 acquires the PPML data from the VDP application 411 as a print job. Then, in step S702, in the information processing apparatus 600, the data analysis unit 612 estimates the record level by analyzing the acquired data using a record level estimation algorithm. The record level estimation algorithm is described below.

Next, in step S703, the record level selection unit 62 acquires the user's selection of the record level. Then, in step S704, the record level selection result notification unit 625 notifies the post-processing unit of the acquired record level.

### <Record Level Estimation Algorithm>

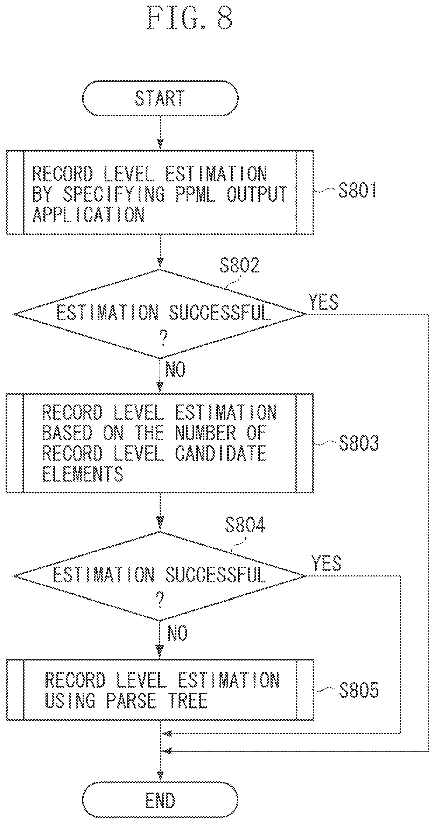

Fig. 8 is a flowchart illustrating details of a process to be performed in step S702 illustrated in Fig. 7. In step S801, the data analysis unit 612 performs record level estimation by specifying a PPML data output application. In PPML, the name and the version number of the VDP application which outputs the PPML data can be described according to a Creator attribute of the PPML element, that is a root element. The name and the version number of the VDP application are described in the Creator attribute of the PPML element. If it can be already known that the VDP application performs record separation by a specific method, the data analysis unit 612 can specify the record level.

For example, if it is already known that the VDP application specified by the Creator attribute "outputs one record by associating the record with one DOCUMENT element at all times", the data analysis unit 612 determines the level of an associated DOCUMENT element as the record level. If the estimation is successfully performed in step S801 (YES in step S802), the data analysis unit 612 finishes the execution of the estimation algorithm. If the record level cannot successfully be estimated (NO in step S802), the processing proceeds to step S803.

Next, in step S803, the data analysis unit 612 performs record level estimation based on the number of record level candidate elements. The record level candidate element is an element that describes a document or a document group. More specifically, the term "record level candidate element" designates the JOB element, the DOCUMENT element, and the PAGE element, described above. The record level estimation based on the number of record level candidate elements is described below.

If the estimation in step S803 is successfully performed (YES in step S804), the data analysis unit 612 finishes the execution of the estimation algorithm in step S804. If the record level cannot successfully be estimated (NO in step S804), then in step S805, the data analysis unit 612 performs record level estimation using a parse tree. The record level estimation using a parse tree is described below.

### <Record Level Estimation Based on The Number of Record Level Candidate Elements>

Figs. 9A through 9C are conceptual images illustrating a process of extracting record level candidate elements from PPML data. Fig. 9A illustrates a case where only one JOB element and only one DOCUMENT element are present, and a plurality of PAGE elements are present in the PPML data. In the case illustrated in Fig. 9A, it is highly likely that the plurality of PAGE elements are associated with the record, the data analysis unit 612 estimates the level of PAGE elements as the record level.

Fig. 9B illustrates a case where only one JOB element is present and a plurality of DOCUMENT elements is present in the PPML data. In this case, only one JOB element is present. Thus, the level of the JOB element cannot be considered as the record level. At that time, if the number of PAGE elements of each DOCUMENT element is the same, the page configuration of each DOCUMENT element is the same. Consequently, it can be considered as highly likely that one DOCUMENT element is a unit of printing. Accordingly, the data analysis unit 612 estimates the level of DOCUMENT elements as the record level.

Fig. 9C illustrates a case where a plurality of JOB elements are present, and only one DOCUMENT element is present corresponding to each of the JOB elements in the PPML data. At that time, if the number of PAGE elements of each DOCUMENT element is the same, the configuration of each JOB element is the same. Consequently, it is highly likely that one unit of printing can be associated with one JOB element. Accordingly, the data analysis unit 612 estimates the level of JOB element as the record level.

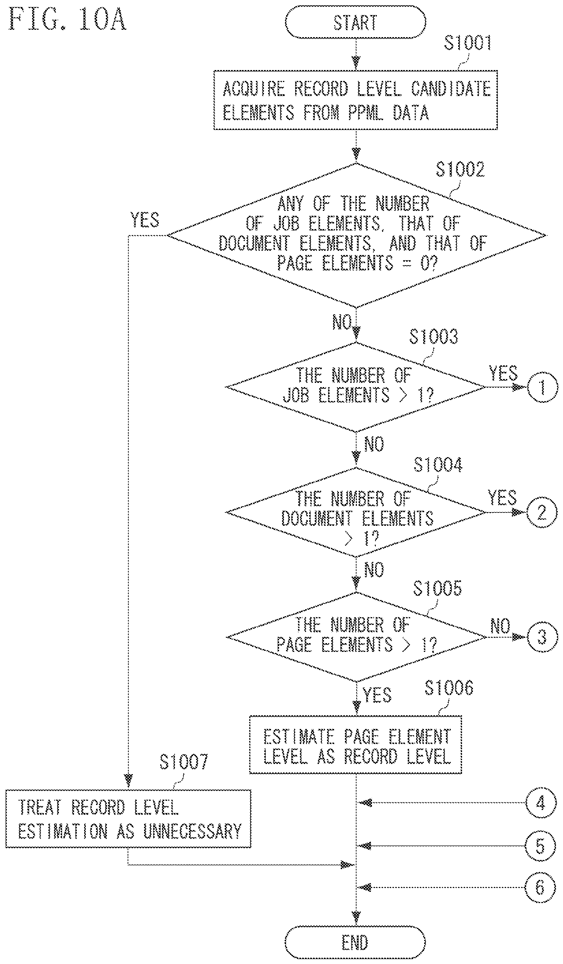

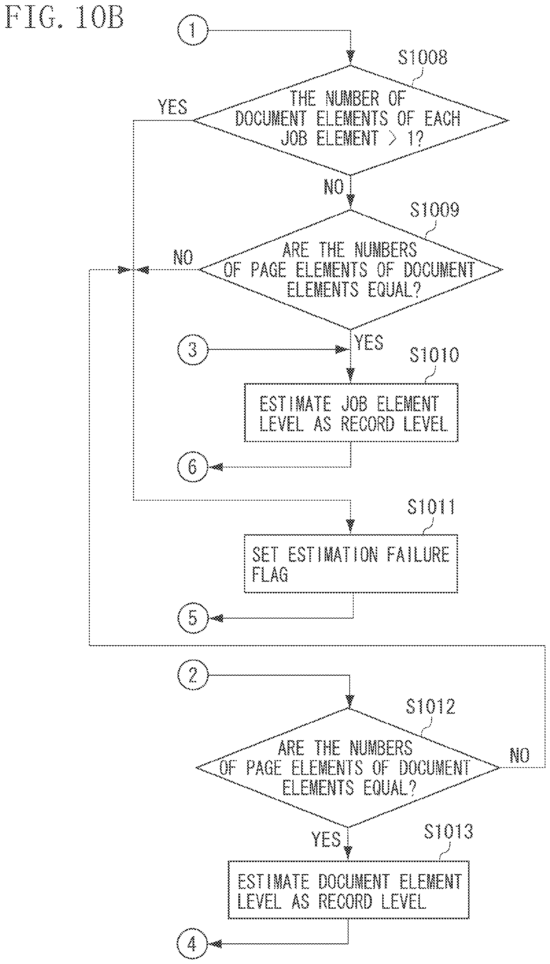

Fig. 10 (including Figs. 10A and 10B) is a flowchart illustrating details of a process to be performed in step S803 illustrated in Fig. 8. In step S1001, the data analysis unit 612 acquires record level candidate elements from the PPML data received from the VDP application 411.

Next, in step S1002, the data analysis unit 612 determines whether the number of JOB elements, that of DOCUMENT elements, or that of PAGE elements is zero. If so (YES in step S1002), the processing proceeds to step S1007 in which the setting of the record level is determined to be unnecessary. Then, the estimation of the record level is finished.

The case where the number of JOB elements, that of DOCUMENT elements, or that of PAGE elements is zero is, for example, that only a declaration of a reusable object available in a plurality of print jobs is performed and that no actual print data is described. In step S1002, if the number of JOB elements, document elements or page elements is not zero (NO in step S1002), the data analysis unit 612 advances the processing to step S1003.

In step S1003, the data analysis unit 612 determines whether the number of JOB elements is greater than one. If the number of JOB elements is one (NO in step S1003), the data analysis unit 612 advances the processing to step S1004. In step S1004, the data analysis unit 612 determines whether the number of DOCUMENT elements included in the JOB element has is larger than one. If the number of DOCUMENT elements is one (NO in step S1004), the data analysis unit 612 advances the processing to step S1005.

If the number of PAGE elements included in the DOCUMENT element is larger than one (YES in step S1005), this case corresponds to the case illustrated in Fig. 9A. Thus, the data analysis unit 612 advances the processing to step S1006, and estimates the level of PAGE elements as the record level.

If the number of PAGE elements included in the DOCUMENT element is one (NO in step S1005), each of the number of JOB elements, that of DOCUMENT elements, and the number of PAGE elements is one. Accordingly, whichever of JOB element, DOCUMENT element, and PAGE element the data analysis unit 612 is selected as an element corresponding to the record level, the same result is obtained.

Thus, if the same result is obtained whichever of JOB element, DOCUMENT element, and PAGE element is selected, the data analysis unit 612 sets one of JOB element, DOCUMENT element, and PAGE element to correspond to the record level, based on a predetermined setting of the one of JOB element, DOCUMENT element, and PAGE element to correspond to the record level. In this case, it is preliminarily assumed that if the same result is obtained whichever of JOB element, DOCUMENT element, and PAGE element is selected, the JOB element is set to correspond to the record level. Accordingly, the data analysis unit 612 advances the processing to step S1010 in which the data analysis unit 612 estimates that the JOB element corresponds to the record level.

If it is determined in step S1003 that the number of JOB elements is larger than one (YES in step S1003), the data analysis unit 612 advances the processing to step S1008. In step S1008, the data analysis unit 612 determines whether the number of DOCUMENT elements included in each JOB element is greater than one. If the number of DOCUMENT elements is larger than one (YES in step S1008), the data analysis unit 612 advances the processing to step S1011, because the record level cannot be estimated on the basis only of the number of record level estimation candidate elements. In step S1011, the data analysis unit 612 sets an estimation failure flag.

If the number of DOCUMENT elements of each job element is one (NO in step S1008), in step S1009, the data analysis unit 612 further determines whether the number of PAGE elements included in each DOCUMENT element is the same. If the number of PAGE elements included in each DOCUMENT element is not the same (NO in step S1009), it is likely that the level of DOCUMENT element is the record level, or that the level of PAGE element is the record level. It cannot be specified which of DOCUMENT element and PAGE element should correspond to the record level. Accordingly, in step S1011, the data analysis unit 612 sets the estimation failure flag.

If the number of PAGE elements included in each DOCUMENT element is the same (YES in step S1009), this case corresponds to the case illustrated in Fig. 9C. Thus, the data analysis unit 612 advances the processing to step S1010 in which the data analysis unit 612 estimates the level of JOB element as the record level.

If the number of DOCUMENT elements is larger than one (YES in step S1004), then in step S1012, the data analysis 612 determines whether the number of PAGE elements included in each DOCUMENT element is the same. If the number of PAGE elements is not the same (NO in step S1012), it is likely that the level of the JOB element is the record level, or that the level of the PAGE element is the record level. It cannot be specified which of the level of the JOB element and that of the PAGE element is the record level. Accordingly, in step S1011, the data analysis unit 612 sets the estimation failure flag. If the number of PAGE elements is the same (YES in step S1012), this case corresponds to the case illustrated in Fig. 9B. Thus, the data analysis unit 612 advances the processing to step S1013 in which the data analysis unit 612 estimates the level of DOCUMENT element as the record level.

### <Record Level Estimation using Parse Tree>

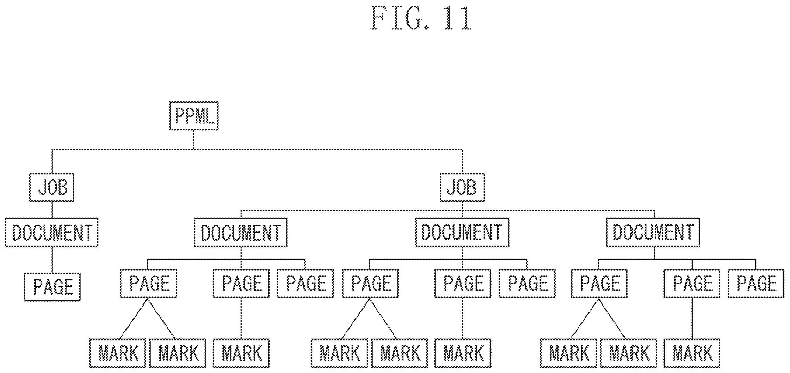

Fig. 11 is a conceptual diagram illustrating a parse tree (i.e., a tag tree structure) obtained by parsing PPML data. The parse tree illustrated in Fig. 11 is obtained when the data analysis unit 612 acquires elements by analyzing the PPML data representing the print job, and sets the acquired element as a node. Fig. 11 illustrates, for simplicity of description, the parse tree using the JOB elements through MARK elements among elements acquired from the PPML data. A MARK element is a rectangular area included in a page in PPML, and indicates a place where an object is inserted. In Fig. 11, the PPML elements through to the MARK elements are shown, and other elements corresponding to lower levels are omitted. Actually, there are other elements of levels lower than that of the MARK elements.

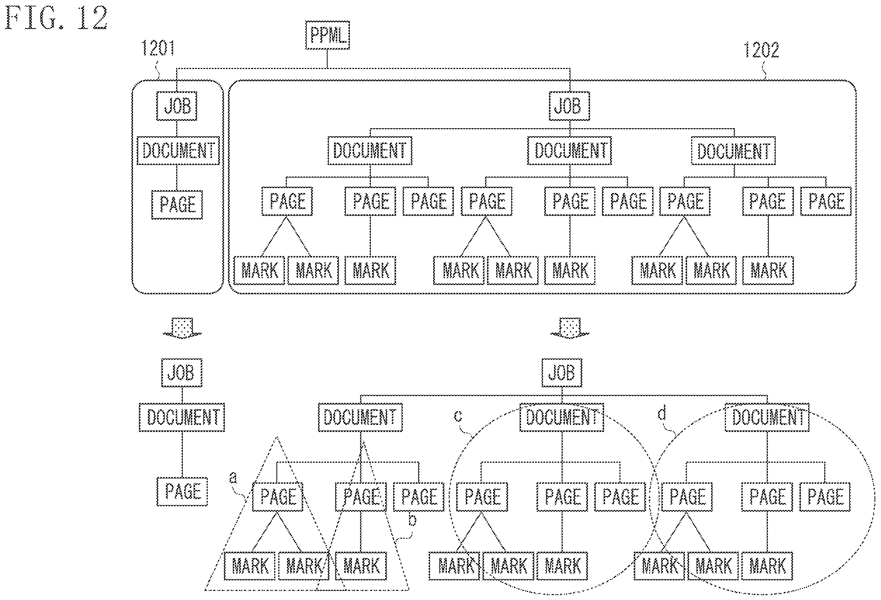

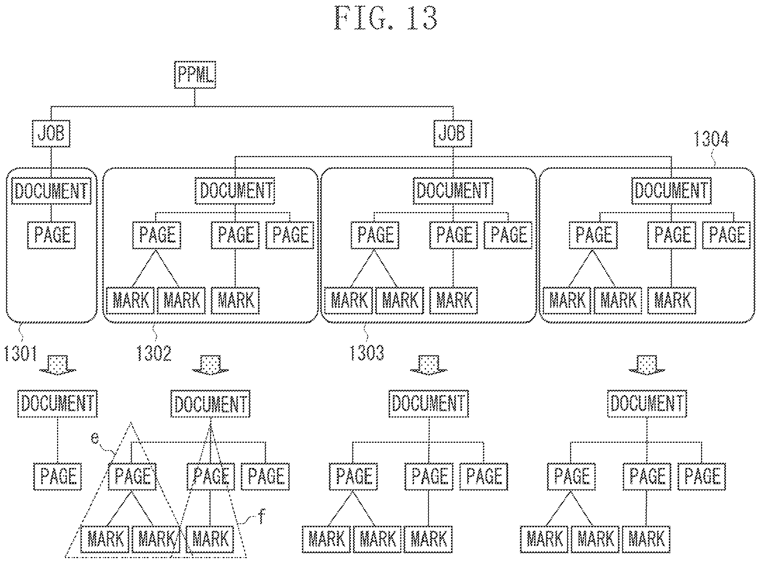

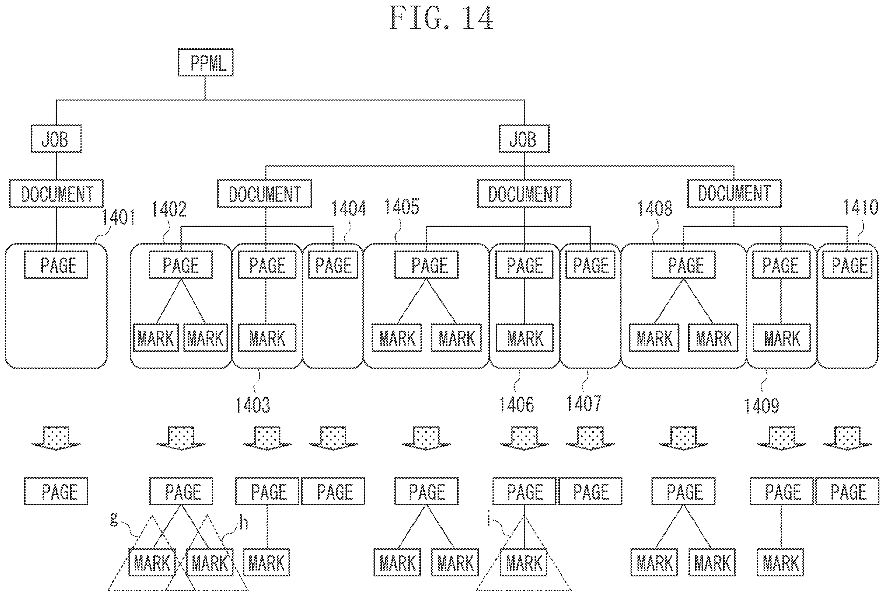

Figs. 12, 13, and 14 are conceptual images illustrating subtrees obtained by dividing the parse tree illustrated in Fig. 11 employing the JOB elements, the DOCUMENT elements, and the PAGE elements which are record level candidate elements of the parse tree as root nodes. Fig. 12 illustrates subtrees 1201 and 1202 obtained by employing the JOB elements as the root nodes. Fig. 13 illustrates subtrees 1301 through 1304 obtained by employing the DOCUMENT elements as the root nodes. Fig. 14 illustrates subtrees 1401 through 1410 obtained by employing the PAGE elements as the root nodes. The above subtrees illustrated in Figs. 12 through 14 further include subtrees "a" through "i".

As described above, a record is a sequence of units of printing. Therefore, the records are similar to one another in the number of pages of each record, and in the structure including fixed regions and variable regions of each page. Accordingly, the subtrees obtained by dividing the parse tree employing elements corresponding to the record level as the root nodes are similar to one another in structure. Then, the data analysis unit 612 obtains a degree of similarity among subtrees corresponding to each record level candidate element. Thus, the data analysis unit 612 estimates the level of the element having the highest degree of similarity as the record level.

As long as it can be determined how much the subtrees having the same root node are similar to one another, any method for obtaining a degree of similarity can be employed. In the present example, a method for estimating the record level using an edit distance of trees is described below. A degree of similarity among XML documents using an edit distance of trees can be calculated by a conventional technique .

In order to measure a degree of similarity among a plurality of XML documents, the data analysis unit 612 counts the necessary number of edit operations, such as insertion, deletion, and replacement, performed on each node of two tree structures configuring XML documents to change the two tree structures into the same tree structure. Then, the data analysis unit 612 obtains the edit distance of the trees based on the necessary number of the edit operations. The necessary number of edit operations is referred to as a "cost". The data analysis unit 612 searches for similar subtrees based on a criterion that subtrees having small edit distances are similar to each other.

An example of calculating edit distances of subtrees obtained by employing the DOCUMENT elements as the root nodes is described below with reference to Fig. 13. An edit distance of trees is a minimum cost (the minimum number of times) needed to convert a tree A into a different tree B by performing operations such as insertion, deletion, and replacement, on the tree A, and is denoted by "t (A, B)". Average values of the edit distances of trees employing the JOB element, the DOCUMENT element, and the PAGE element as the root nodes are denoted by "Sjob", "Sdocument", and "Spage", respectively.

There are various types of edit distances. For example, an edit distance is such that all costs of edit operations such as insertion, deletion, and replacement are set at one. Another edit distance is such that costs of respective edit operations are set at different values. In the present example, for simplicity of description, all the costs of the operations are assumed to be one. First, the data analysis unit 612 defines, as a reference tree, a single reference subtree from among the subtrees employing the DOCUMENT elements as the root nodes illustrated in Fig. 13.

In the example illustrated in Fig. 13, the data analysis unit 612 sets a subtree 1302 as a reference tree. Then, the data analysis unit 612 performs edit operations such as insertion, deletion, and replacement on trees so that the trees other than the reference tree 1302 are matched with the reference tree 1302. The data analysis unit 612 calculates an edit distance between the reference tree 1302 and each of the trees other than the reference tree 1302 from the minimum value of an edit operation cost. Then, the data analysis unit 612 calculates an average value of the calculated edit distance.

Subtrees 1303 and 1304 are similar to the reference tree 1302 in structure. Thus, the edit distance of trees t (1302, 1303) = t(1302, 1304) = 0. In order to change a subtree 1301 to be matched with the tree 1302, it is necessary to perform the insertion of a subtree employing the PAGE elements as the root nodes into the subtree 1301 twice (subtrees "e" and "f") . Thus, the edit distance t(1302, 1301) = 2. Accordingly, the average value of the edit distance of trees employing the DOCUMENT elements as the root nodes is calculated as Sdocument = (0 + 0 + 2) /3 = 0.66 ...

Similarly, the average value Sjob of the edit distance of trees illustrated in Fig. 12 is calculated as follows. More specifically, in order to convert a tree 1201 into a tree 1202, it is necessary to perform the insertion of a subtree employing the PAGE elements as the root nodes into the tree 1201 twice (subtrees "a" and "b") and the insertion of a subtree employing the DOCUMENT elements as the root nodes into the tree 1201 twice (subtrees "c" and "d"). Accordingly, t(1201, 1202) = 4. Thus, Sjob = (4)/1= 4.

In the example illustrated in Fig. 14, a subtree 1401 is set as a reference tree. The cost of converting a subtree 1402 to be matched with the subtree 1401 is calculated as follows. To convert the subtree 1402, it is necessary to perform the deletion of a subtree employing the MARK elements as the root nodes twice (subtrees "g" and "h"). Thus, t(1402, 1401) = 2. In order to convert each of the subtrees 1405 and 1408 in such a manner, the same edit operations as those needed to convert the subtree 1402 are needed. Thus, t(1405, 1401) = t(1408, 1401) = 2. The cost of converting a subtree 1406 to be matched with the reference tree 1401 is calculated as follows. More specifically, it is necessary to perform the deletion of a subtree "i" employing the MARK element as the root node once. Thus, t(1406, 1401) = 1.

In order to convert each of subtrees 1403 and 1409 in such a manner, it is necessary to perform the same edit operation as that needed to convert the tree 1406. Accordingly, t(1403, 1401) = t(1409, 1401) = 1. Subtrees 1404, 1407, and 1410 have the same structure as that of the reference tree 1401. Thus, the cost of converting each of the subtrees 1404, 1407, and 1410 is 0. Accordingly, Spage = (2 + 1 + 0 + 2 + 1 + 0 + 2 + 1 + 0)/9 = 9/9 = 1.

Accordingly, the degree of similarity of trees among subtrees, which have the minimum average value of the edit distances of trees and employ the DOCUMENT elements as the root nodes, can be regarded as high. Consequently, the data analysis unit 612 estimates the level of the DOCUMENT element as the record level.

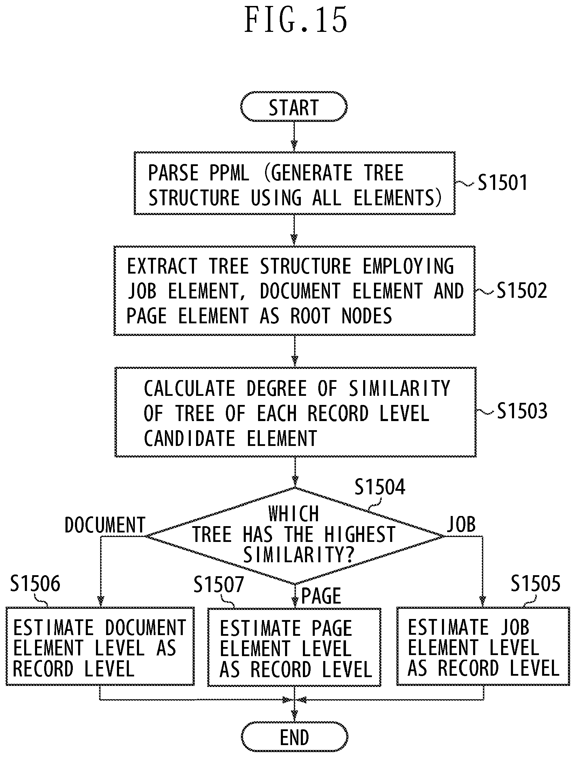

Fig. 15 is a flowchart illustrating details of a process performed in step S805 illustrated in Fig. 8. In step S1501, the data acquisition unit 611 acquires the PPML data. The data analysis unit 612 analyzes the above PPML data and generates a parse tree. Then, in step S1502, the data analysis unit 612 divides the parse tree and extracts subtrees by setting the record level candidate elements as the root nodes.

Next, in step S1503, the data analysis unit 612 calculates an average value of the edit distances of the subtrees and compares the degrees of similarity of trees of the record level candidate elements.

In step S1504, if the average value Sjob of the edit distance of trees is the minimum of the average values of the edit distance, the data analysis unit 612 determines that the degree of similarity in the case of employing the JOB elements as the root nodes is highest (JOB in step S1504) . In this case, the data analysis unit 612 advances the processing to step S1505 and estimates the level of the JOB element as the record level.

If the average value Sdocument of the edit distance of trees is the smallest of the average values of the edit distance, the data analysis unit 612 determines that the degree of similarity in the case of employing the DOCUMENT elements as the root nodes is highest (DOCUMENT in step S1504) . In this case, the data analysis unit 612 advances the processing to step S1506 in which the data analysis unit 612 estimates the level of the DOCUMENT element as the record level.

If the average value Spage of the edit distance of trees is the minimum of the average values of the edit distance, the data analysis unit 612 determines that the degree of similarity in the case of employing the PAGE elements as the root nodes is highest (PAGE in step S1504) . In this case, the data analysis unit 612 advances the processing to step S1507 in which the data analysis unit 612 estimates the level of the PAGE elements as the record level.

In order to avoid occurrence of a case in which the average values of the edit distance of trees respectively corresponding to two or more of JOB element, DOCUMENT element, and PAGE element are the same, a user may set a priority order in setting the record level to the elements, like JOB element > DOCUMENT element > PAGE element in advance. The priority order can arbitrarily set, e.g., the order of PAGE element > DOCUMENT element > JOB element. Consequently, if the average values of the edit distance are the same among the PAGE element, the DOCUMENT element, and the JOB element, the data analysis unit 612 can estimate the level of the element having a higher priority order as the record level.

Generally, when a plurality of records are described in PPML, high-level nodes or elements, such as PPML elements or JOB elements, have a common pattern. However, it is often unnecessary for the low-level elements to have a common pattern for each record. For example, it is frequent that the number of elements such as DOCUMENT elements and PAGE elements has a common value corresponding to each customer. However, elements, such as MARK elements and OBJECT elements, for representing contents of the page may be changed in arrangement and the number thereof with the customers. Thus, the degree of similarity of trees can be calculated by weighting the costs of the edit operations performed on the high-level nodes, and the calculated degree of similarity of trees can reflect characteristics of the document.

If it is known in advance that the arrangement and the number of variable regions and fixed regions provided in a page vary with units of printing, the data analysis unit 612 compares the degree of similarity of trees, which corresponds only to elements whose levels are higher than that of a certain element, without using all elements included in the PPML data. Consequently, efficiency in estimating the degree of similarity of trees can be increased.

### <Record Level Selection>

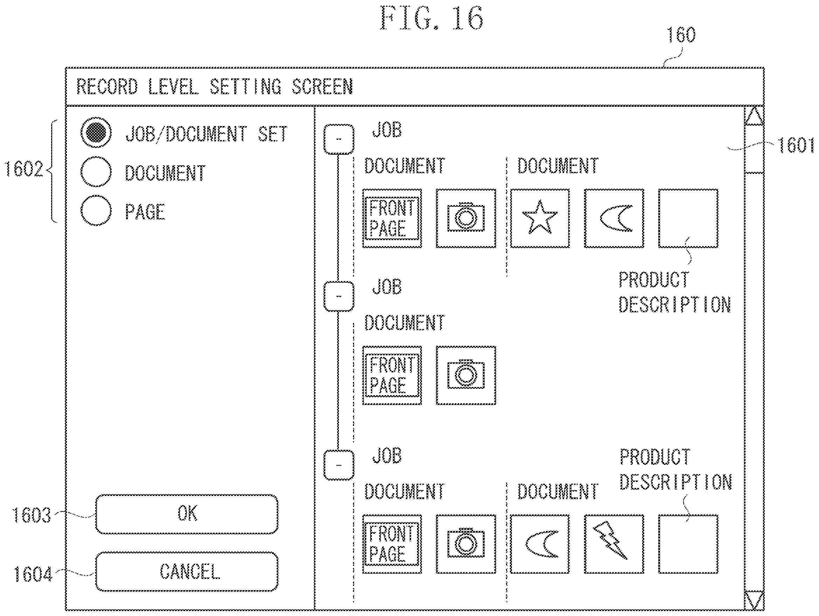

Fig. 16 is a conceptual diagram illustrating a record level setting screen 160. The record level setting screen 160 is displayed on the display device unit 501 by the display unit 601 of the record level setting display unit 60.

A page display region 1601 is a region in which the pages of a job are displayed by reflecting a result of the estimation of the record level and a user's selection of the record level. A record level selection radio button 1602 serving as an example of a record level selection object is a radio button which receives the user's selection of a record level candidate element. The radio button is an example of the record level selection object. For example, a pull-down menu can be employed as the record level selection object. It is assumed that an initial screen of the record level setting screen 160 is in a state in which the record level estimated by the record level estimation unit 61 is selected by the radio button.

When a user's selection of the radio button of one of JOB element, DOCUMENT element, and PAGE element is received, the record level selection acquisition unit 624 receives, as the record level, the element which receives the selection. The record level display control unit 623 transfers the record level to the display unit 601. The display unit 601 changes the record level setting screen 160 to a display reflecting the acquired record level.

An OK button 1603 is a button for setting the element currently selected in the record level setting screen 160 to the record level. A cancel button 1604 is a button for finishing processing for setting the record level by closing the record level setting display unit without setting the record level.

The page display region 1601 illustrated in Fig. 16 is a display image in the case of setting the level of the JOB element. If the level of the JOB element is set as the record level, the hierarchical structure of the DOCUMENT elements included in the JOB element is disregarded. Further, pages included in each DOCUMENT element are displayed in the page display region 1601 as being assumed to be present at the level just under the JOB element. The display of the page display region 1601 which is performed by employing the level of such JOB element as the record level is referred to as "display in units of JOB elements". Similarly, the display of the page display region 1601 which is performed by employing the level of the DOCUMENT element as the record level is referred to as "display in units of DOCUMENT elements". The display of the page display region 1601 which is performed by employing the level of the PAGE element as the record level is referred to as "display in units of PAGE elements".

As a method of displaying a page in the page display region 1601, a page to be displayed may be subjected to RIP processing in advance, and bitmap image data of the acquired page may be displayed as a thumbnail, or an output image of layout of a page may be displayed without performing the RIP processing. The record level display control unit 623 displays the record level setting screen 160 by reflecting the record level acquired by the record level estimation result acquisition unit 622. Alternatively, the record level display control unit 623 displays the record level setting screen 160 by reflecting the record level acquired by the record level selection acquisition unit 624. Hereinafter, the display of the record level by being reflected in the page display region 1601 of the record level setting screen 160 is referred to as the "page display according to the record level".

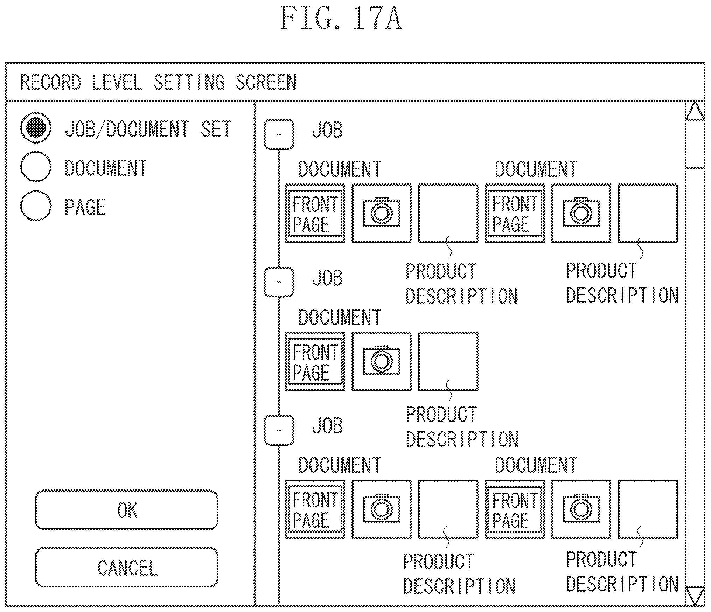

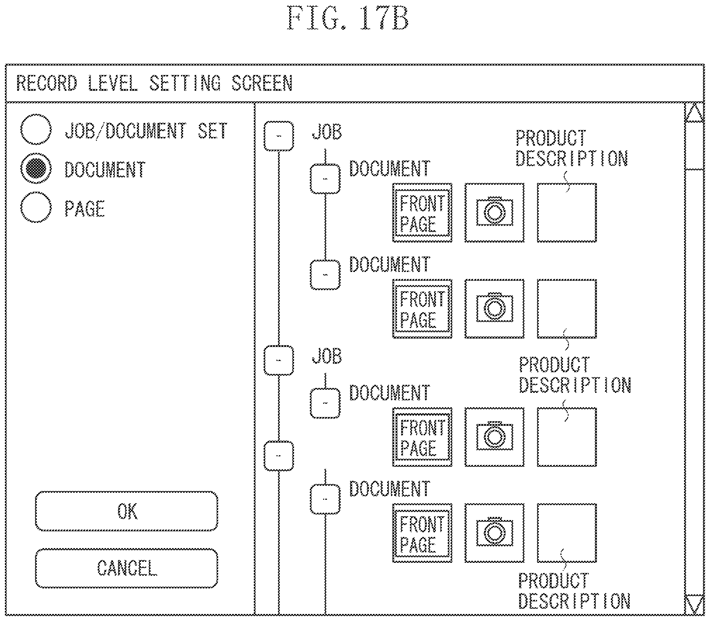

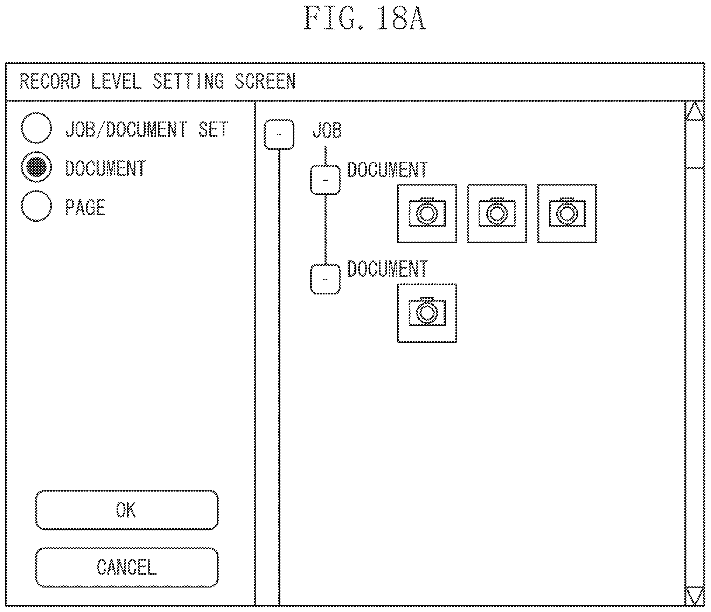

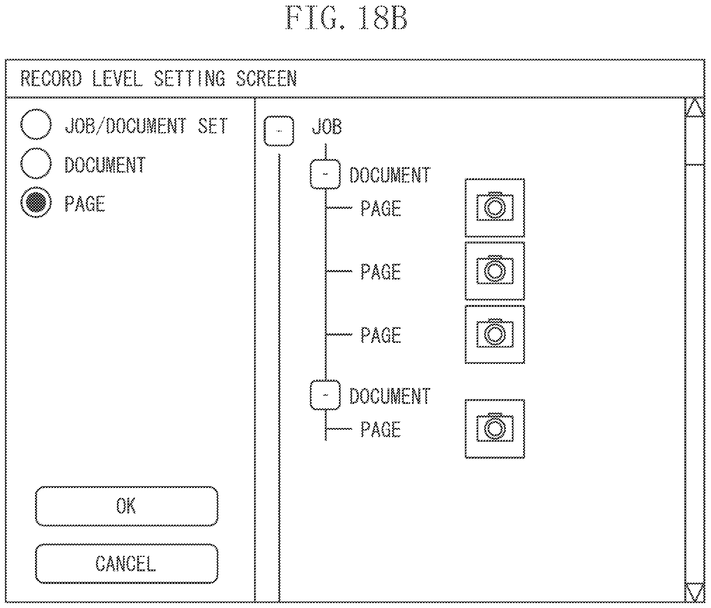

Switching of display according to the record level is described below with reference to Figs. 17A, 17B, 18A, and 18B. Fig. 17A illustrates an example of the record level setting screen 160 in which print images of PPML data are displayed in units of JOB elements. Fig. 17B illustrates an example of the record level setting screen 160 in which the print images of the PPML data are displayed in units of DOCUMENT elements, similarly to Fig. 17A.

Upon receiving a user's selection of the record level selection radio button 1602, the record level display control unit 623 switches the current display of the record level current setting screen 160 to a display illustrated in Fig. 17A if the radio button corresponding to the JOB element is selected, or to a display illustrated in Fig. 17B if the radio button corresponding to the DOCUMENT element is selected. It is now assumed that the current display of the record level setting screen 160 is a display illustrated in Fig. 17A, and a user wishes to change the display on the page display region 1601 from the data in units of JOB elements to the data in units of DOCUMENT elements. In this case, the record level selection acquisition unit 624 receives the user's selection of the record level selection radio button 1602. Thus, the record level display control unit 623 changes the display of the page display region 1601 to the display of data in units of DOCUMENT elements, as illustrated in Fig. 17B.

Similarly, Fig. 18A illustrates an example of the record level setting screen 160 in which the print images of the PPML data are displayed in units of DOCUMENT elements . Fig. 18B illustrates an example of the record level setting screen 160 in which the print images of the PPML data are displayed in units of PAGE elements. Upon receiving a user's selection of the record level selection radio button 1602, the record level display control unit 623 switches the current display of the record level current setting screen 160 to the display illustrated in Fig. 18A if the radio button corresponding to the DOCUMENT element is selected, or to the display illustrated in Fig. 18B if the radio button corresponding to the PAGE element is selected.

It is assumed that the current display of the record level setting screen 160 is the display as illustrated in Fig. 18A, and a user wishes to change the display on the page display region 1601 from the data in units of DOCUMENT elements to the data in units of PAGE elements. In this case, the record level selection acquisition unit 624 receives the user's selection of the record level selection radio button 1602. Thus, the record level display control unit 623 changes the display of the page display region 1601 to the display of data in units of PAGE elements, as illustrated in Fig. 18B.

In the example illustrated in Figs. 17A and 17B, if the data is displayed by the record level illustrated in Fig. 17B, it can be confirmed that a front page first appears in the element set as the record level. Consequently, the level of the element illustrated in Fig. 17B is more highly likely the record level, as compared with that in the display illustrated in Fig. 17A. In the example illustrated in Figs. 18A and 18B, all pages have the same configuration, and each single page corresponds to one record. Thus, the level of the element illustrated in Fig. 18B (in which the PAGE element associated with the record) is more highly likely the record level, as compared with that in the display illustrated in Fig. 18A. Accordingly, whether the user's selection of the record level is appropriate or not can be determined by a user by switching between the displays illustrated in Figs. 17A and 17B, and the displays illustrated in Figs. 18A and 18B.

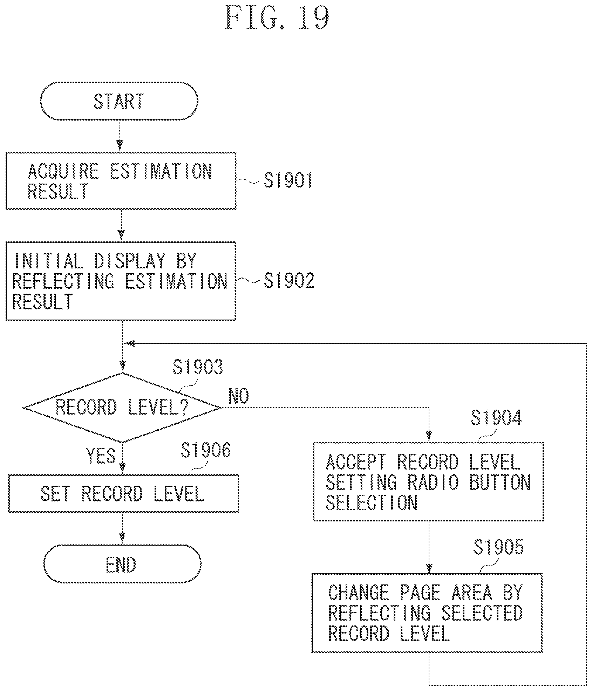

Fig. 19 is a flowchart illustrating a process of selecting a record level by a user. In step S1901, the record level estimation result acquisition unit 622 acquires a record level estimated by the record level estimation unit 61. In step S1902, the record level display control unit 623 causes the page display region 1601 of the record level setting screen 160 to display a page according to the record level by reflecting a result of the estimation.

In step S1903, if the OK button is not selected by a user (NO in step S1903), the record level selection acquisition unit 624 advances the processing to step S1904 in which the record level selection acquisition unit 624 receives the user's selection of the record level using the record level selection radio button 1602. Next, in step S1905, the record level display control unit 623 performs display of a page according to the record level the selection of which is received in step S1904. The record level selection unit 62 repeats processing in steps S1903 through S1905 until the record level selection unit 62 receives the selection of the OK button 1603 by the user.

If the record level selection unit 62 receives the selection of the OK button 1603 by the user in step S1903 (YES in step S1903), the record level selection unit 62 advances the processing to step S1906. Then, the element currently selected is set as the record level. Thus, the selection of the record is finished. If the record level selection unit 62 receives the selection of the cancel button 1604 during the processing in the flowchart, the record selection unit 62 finishes the processing without setting the record level.

### <Record Level Notification Method>

As long as the print server 40 can control the post-processing device 404, any method can be employed as a record level notification method. One record level notification method is such that the information processing apparatus 600 associates a record level with an element using metadata and notifies the print server 402 of the record level.

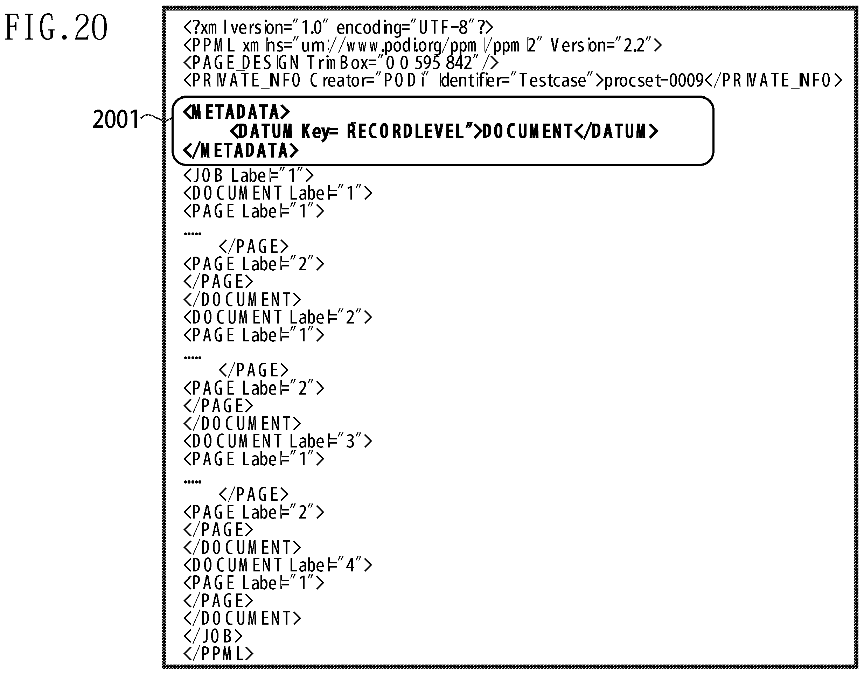

Fig. 20 is a conceptual diagram illustrating the description of PPML data to notify the post-processes of the record level using metadata. A description part 2001 of metadata associates the record level with the element. In Fig. 20, a description associating the record level with the DOCUMENT element is made using metadata.

When the record level is notified to the post-processes using metadata, the record level selection result notification unit 625 describes in Key attribute of a DATUM element in the metadata that this metadata designates the record level. Then, the record level selection result notification unit 625 describes the name of the element, the level of which is set as the record level, as contents of the DATUM element. If the record level is the level of the JOB element or the PAGE element, the value "DOCUMENT" in the DATUM element illustrated in Fig. 20 is replaced with the value "JOB" or "PAGE".

The PPML data including the metadata in which the record level is explicitly described is transmitted to the post-processes. Consequently, the print server 402 can control the post-processing device 404 and perform print control in units of records described in a job ticket.

When the record level is transmitted to the post-processes by the above method, the information processing apparatus according to the present exemplary embodiment receives the PPML data as input thereto, and outputs the PPML data to which the metadata is attached. Then, the information processing apparatus transmits to the print server 402 the PPML data together with the job ticket. The print server 402 receives the PPML data together with the job ticket and performs RIP processing using the PPML data to which the metadata is attached. Then, the print server 402 prints the data by controlling the post-processing device 404 according to the job ticket.

As a method for notifying the print server 402 of the record level, a method for describing the name of the element, the level of which is set as the record level, in a part corresponding to the record level in the job ticket, instead of attaching the metadata to the PPML data can be employed instead of the above method. In addition, a method for storing the record level as system-understandable internal information can be also employed.

According to the present exemplary embodiment, the analysis, display, selection, and notification of a print job output from the VDP application are performed in the hot folder. However, these processes can be performed in any other portion, before the RIP processing. This can be applied to the VDP application, workflow software, the print server, and the like.

Thus, according to the present exemplary embodiment, the function of estimating the level of the element corresponding to the record can be provided by structurally analyzing the print job described in the format such as PPML. In order to handle cases where neither the estimation nor the confirmation of results of the estimation can be performed, a device for enabling a user to explicitly set the level of the element corresponding to the record can be provided. In addition, the obtained level of the element corresponding to the record can be notified to post-processes, so that a post-processing unit capable of performing the post-processing in units of records subsequent to printing can be provided.

Consequently, even if no record separation can be designated using a VDP language format, the level of the element corresponding to the record can be designated. Further, even in a case where a user lacks knowledge of the VDP language format, the user can confirm whether the result of the estimation is correct. If the result of the estimation is incorrect, the user can instruct the apparatus to correct the result of the estimation. Furthermore, the post-processing in units of records can be performed by notifying the post-processes of the level of the element corresponding to the above determined record.

According to the present exemplary embodiment, in a print job which is described in a format such as PPML and where it is not clearly determined what element corresponds to a record level, processing in units of records can be performed.

The present invention can also be realized by executing the following processing. More specifically, software (a program) for realizing the functions of the above exemplary embodiments is supplied to a system or an apparatus via a network or various storage media and a computer (or CPU or micro processing unit (MPU)) of the system or the apparatus reads and executes the program. In this case, the program and the storage media storing the program constitutes the present invention.

## Claims

1. An information processing apparatus (600) comprising:
data acquisition means (611) configured to acquire a print job from a variable data printing (VDP) application, the print job having a hierarchical structure with a plurality of hierarchical levels and comprising elements at the plurality of hierarchical levels,
**characterized in that** the information processing apparatus further comprises:
data analysis means (612) configured to analyze the print job acquired by the data acquisition means and to estimate, based on a type of the variable data printing application or the number of elements at each hierarchical level which are obtained by the analyzing, which hierarchical level among the plurality of hierarchical levels is a record level corresponding to a record serving as a unit of repetition of variable data;
record level display control means (623) configured to control a display device to display a record level setting screen which includes a record level selection object for receiving, from a user, selection of a record level from a plurality of hierarchical levels including the hierarchical level estimated as the record level by the data analysis means, wherein an initial screen of the record level setting screen is in a state that the hierarchical level estimated as the record level by the data analysis means is selected in the record level selection object;
record level selection acquisition means (624) configured to acquire a record level selected via the record level selection object in the record level setting screen; and
notification means (625) configured to notify post-processing means of the record level acquired by the record level selection acquisition means for performing post-processing of the print job in units of the selected record level.

2. The information processing apparatus according to claim 1,
wherein the record level setting screen further includes an area for displaying pages of the print job, and
wherein the record level display control means is configured to perform control to display the pages of the print job at the record level selected in the record level selection object in the area.

3. The information processing apparatus according to claim 1 or claim 2, wherein the data analysis means is configured to calculate for each level of element a similarity of trees employing an element of that level as a root node, to compare calculated values of the similarity, and to estimate, as the record level, a level of the element having the highest value of the similarity.

4. The information processing apparatus according to any one of claims 1 to 3, wherein the notification means is configured to notify the post-processing means for performing the post-processing of the print job of the record level by describing in the print job metadata which indicates the record level of the element which is acquired by the record level selection acquisition means.

5. The information processing apparatus according to any one of claims 1 to 3, wherein the notification means is configured to notify the post-processing means for performing the post-processing of the print job of the record level by describing in a job ticket of the print job metadata which indicates the record level of the element which is acquired by the record level selection acquisition means.

6. A method for information processing to be executed by an information processing apparatus, comprising:
acquiring a print job comprising elements at a plurality of levels from a variable data printing (VDP) application, the print job having a hierarchical structure with a plurality of hierarchical levels and comprising elements at the plurality of hierarchical levels,
**characterized in that** the method further comprises:
analyzing the acquired print job and estimating, based on a type of the variable data printing application or the number of elements at each hierarchical level which are obtained by the analyzing, which hierarchical level among the plurality of hierarchical levels is a record level corresponding to a record serving as a unit of repetition of variable data;
controlling a display device to display a record level setting screen which includes a record level selection object for receiving, from a user, selection of a record level from a plurality of hierarchical levels including the hierarchical level estimated as the record level, wherein an initial screen of the record level setting screen is in a state that the hierarchical level estimated as the record level is selected in the record level selection object;
acquiring a record level selected via the record level selection object in the record level setting screen; and
notifying post-processing means of the acquired record level for performing post-processing of the print job in units of the selected record level.

7. A program which, when run on a device, causes the device to execute a method according to claim 6.

8. A storage medium storing a program according to claim 7.

## Patentansprüche

1. Informationsverarbeitungsvorrichtung (600) umfassend:
eine Datenerfassungseinrichtung (611), die konfiguriert ist, um einen Druckauftrag aus einer Anwendung mit Drucken variabler Daten (VPD) zu erfassen, wobei der Druckauftrag eine hierarchische Struktur mit mehreren Hierarchieebenen aufweist und Elemente auf den mehreren Hierarchieebenen umfasst,
**dadurch gekennzeichnet, dass** die Informationsverarbeitungsvorrichtung weiterhin umfasst:
eine Datenanalyseeinrichtung (612), die konfiguriert ist, um den durch die Datenerfassungseinrichtung erfassten Druckauftrag zu analysieren und um basierend auf einem Typ der Anwendung mit Drucken variabler Daten oder der Anzahl von Elementen auf jeder Hierarchieebene, die durch das Analysieren erhalten werden, einzuschätzen, welche Hierarchieebene unter den mehreren Hierarchieebenen eine Datensatzebene ist, die einem Datensatz entspricht, der als eine Wiederholungseinheit von variablen Daten dient;
eine Datensatzebene-Anzeigesteuerungseinrichtung (623), die konfiguriert ist, um ein Anzeigedevice zu steuern, um einen Datensatzebene-Einstellbildschirm anzuzeigen, der ein Datensatzebene-Auswahlobjekt beinhaltet, um von einem Benutzer eine Auswahl einer Datensatzebene aus mehreren Hierarchieebenen, die die durch die Datenanalyseeinrichtung als die Datensatzebene eingeschätzte Hierarchieebene beinhalten, zu empfangen, wobei ein Anfangsbildschirm des Datensatzebene-Einstellbildschirms in einem Zustand ist, in dem die durch die Datenanalyseeinrichtung als die Datensatzebene eingeschätzte Hierarchieebene im Datensatzebene-Auswahlobjekt ausgewählt ist;
eine Datensatzebene-Auswahlerfassungseinrichtung (624), die konfiguriert ist, um eine über das Datensatzebene-Auswahlobjekt im Datensatzebene-Einstellbildschirm ausgewählte Datensatzebene zu erfassen; sowie
eine Benachrichtigungseinrichtung (625), die konfiguriert ist, um eine Nachverarbeitungseinrichtung über die durch die Datensatzebene-Auswahlerfassungseinrichtung erfasste Datensatzebene zum Durchführen der Nachverarbeitung des Druckauftrags in Einheiten der ausgewählten Datensatzebene zu benachrichtigen.

2. Informationsverarbeitungsvorrichtung nach Anspruch 1,
wobei der Datensatzebene-Einstellbildschirm weiterhin einen Bereich zum Anzeigen von Seiten des Druckauftrags beinhaltet, und
wobei die Datensatzebene-Anzeigesteuerungseinrichtung konfiguriert ist, um eine Steuerung durchzuführen, um die Seiten des Druckauftrags auf der im Datensatzebene-Auswahlobjekt ausgewählten Datensatzebene im Bereich anzuzeigen.

3. Informationsverarbeitungsvorrichtung nach Anspruch 1 oder Anspruch 2,
wobei die Datenanalyseeinrichtung konfiguriert ist, um für jede Elementebene eine Ähnlichkeit von Bäumen, die ein Element von jener Ebene als Wurzelknoten verwenden, zu berechnen, um berechnete Werte der Ähnlichkeit zu vergleichen, und um eine Ebene des Elements, das den höchsten Wert der Ähnlichkeit aufweist, als die Datensatzebene einzuschätzen.

4. Informationsverarbeitungsvorrichtung nach einem der Ansprüche 1 bis 3,
wobei die Benachrichtigungseinrichtung konfiguriert ist, um die Nachverarbeitungseinrichtung zum Durchführen der Nachverarbeitung des Druckauftrags über die Datensatzebene zu benachrichtigen, indem sie im Druckauftrag Metadaten beschreibt, die die Datensatzebene des Elements angeben, das durch die Datensatzebene-Auswahlerfassungseinrichtung erfasst wird.

5. Informationsverarbeitungsvorrichtung nach einem der Ansprüche 1 bis 3,
wobei die Benachrichtigungseinrichtung konfiguriert ist, um die Nachverarbeitungseinrichtung zum Durchführen der Nachverarbeitung des Druckauftrags über die Datensatzebene zu benachrichtigen, indem sie in einem Auftragsticket des Druckauftrags Metadaten beschreibt, die die Datensatzebene des Elements angeben, das durch die Datensatzebene-Auswahlerfassungseinrichtung erfasst wird.

6. Verfahren für eine durch eine Informationsverarbeitungsvorrichtung auszuführende Informationsverarbeitung, das umfasst:
Erfassen eines Druckauftrags, der Elemente auf mehreren Ebenen aus einer Anwendung mit Drucken variabler Daten (VPD) umfasst, wobei der Druckauftrag eine hierarchische Struktur mit mehreren Hierarchieebenen aufweist und Elemente auf den mehreren Hierarchieebenen umfasst,
**dadurch gekennzeichnet, dass** das Verfahren weiterhin umfasst:
Analysieren des erfassten Druckauftrags und Einschätzen basierend auf einem Typ der Anwendung mit Drucken variabler Daten oder der Anzahl von Elementen auf jeder Hierarchieebene, die durch das Analysieren erhalten werden, welche Hierarchieebene unter den mehreren Hierarchieebenen eine Datensatzebene ist, die einem Datensatz entspricht, der als eine Wiederholungseinheit von variablen Daten dient;
Steuern eines Anzeigedevices, um einen Datensatzebene-Einstellbildschirm anzuzeigen, der ein Datensatzebene-Auswahlobjekt beinhaltet, um von einem Benutzer eine Auswahl einer Datensatzebene aus mehreren Hierarchieebenen, die die als die Datensatzebene eingeschätzte Hierarchieebene beinhalten, zu empfangen, wobei ein Anfangsbildschirm des Datensatzebene-Einstellbildschirms in einem Zustand ist, in dem die als die Datensatzebene eingeschätzte Hierarchieebene im Datensatzebene-Auswahlobjekt ausgewählt ist;
Erfassen einer über das Datensatzebene-Auswahlobjekt im Datensatzebene-Einstellbildschirm ausgewählten Datensatzebene; sowie
Benachrichtigen einer Nachverarbeitungseinrichtung über die erfasste Datensatzebene zum Durchführen einer Nachverarbeitung des Druckauftrags in Einheiten der ausgewählten Datensatzebene.

7. Programm, das, wenn es auf einem Device läuft, dieses dazu veranlasst, ein Verfahren nach Anspruch 6 auszuführen.

8. Speichermedium, das ein Programm nach Anspruch 7 speichert.

## Revendications

1. Appareil de traitement d'informations (600), comprenant :
un moyen d'acquisition de données (611) configuré pour acquérir une tâche d'impression à partir d'une application d'impression de données variables (VDP), la tâche d'impression ayant une structure hiérarchique comportant une pluralité de niveaux hiérarchiques et comprenant des éléments à la pluralité de niveaux hiérarchiques,
l'appareil de traitement d'informations étant **caractérisé en ce qu'**il comprend en outre :
un moyen d'analyse de données (612) configuré pour analyser la tâche d'impression acquise par le moyen d'acquisition de données et pour estimer, sur la base d'un type de l'application d'impression de données variables ou du nombre d'éléments à chaque niveau hiérarchique qui sont obtenus par l'analyse, le niveau hiérarchique parmi la pluralité de niveaux hiérarchiques qui est un niveau d'enregistrement correspondant à un enregistrement servant d'unité de répétition de données variables ;
un moyen de commande d'affichage de niveau d'enregistrement (623) configuré pour commander un dispositif d'affichage de sorte qu'il affiche un écran de définition de niveau d'enregistrement qui comprend un objet de sélection de niveau d'enregistrement permettant de recevoir, d'un utilisateur, une sélection d'un niveau d'enregistrement d'une pluralité de niveaux hiérarchiques comprenant le niveau hiérarchique estimé en tant que niveau d'enregistrement par le moyen d'analyse de données, où un écran initial de l'écran de définition de niveau d'enregistrement est dans un état dans lequel le niveau hiérarchique estimé en tant que niveau d'enregistrement par le moyen d'analyse de données est sélectionné dans l'objet de sélection de niveau d'enregistrement ;
un moyen d'acquisition de sélection de niveau d'enregistrement (624) configuré pour acquérir un niveau d'enregistrement sélectionné par le biais de l'objet de sélection de niveau d'enregistrement dans l'écran de définition de niveau d'enregistrement ; et
un moyen de notification (625) configuré pour notifier, au moyen de post-traitement, le niveau d'enregistrement acquis par le moyen d'acquisition de sélection de niveau d'enregistrement afin d'exécuter un post-traitement de la tâche d'impression dans des unités du niveau d'enregistrement sélectionné.

2. Appareil de traitement d'informations selon la revendication 1,
dans lequel l'écran de définition de niveau d'enregistrement comprend en outre une zone permettant d'afficher des pages de la tâche d'impression, et
dans lequel le moyen de commande d'affichage de niveau d'enregistrement est configuré pour effectuer une commande d'affichage des pages de la tâche d'impression au niveau d'enregistrement sélectionné dans l'objet de sélection de niveau d'enregistrement dans la zone.

3. Appareil de traitement d'informations selon la revendication 1 ou la revendication 2, dans lequel le moyen d'analyse de données est configuré pour calculer, pour chaque niveau d'élément, une similarité d'arborescences employant un élément de ce niveau en tant que noeud racine, pour comparer des valeurs calculées de la similarité, et pour estimer, en tant que niveau d'enregistrement, un niveau de l'élément affichant la valeur la plus élevée de la similarité.

4. Appareil de traitement d'informations selon l'une quelconque des revendications 1 à 3, dans lequel le moyen de notification est configuré pour notifier, au moyen de post-traitement, qu'il convient d'exécuter le post-traitement de la tâche d'impression du niveau d'enregistrement par une description, dans la tâche d'impression, de métadonnées indiquant le niveau d'enregistrement de l'élément qui est acquis par le moyen d'acquisition de sélection de niveau d'enregistrement.

5. Appareil de traitement d'informations selon l'une quelconque des revendications 1 à 3, dans lequel le moyen de notification est configuré pour notifier, au moyen de post-traitement, qu'il convient d'exécuter le post-traitement de la tâche d'impression du niveau d'enregistrement par une description, dans un ticket de tâche de la tâche d'impression, de métadonnées indiquant le niveau d'enregistrement de l'élément qui est acquis par le moyen d'acquisition de sélection de niveau d'enregistrement.

6. Procédé de traitement d'informations devant être exécuté par un appareil de traitement d'informations, comprenant l'étape consistant à :
acquérir une tâche d'impression comprenant des éléments à une pluralité de niveaux à partir d'une application d'impression de données variables (VDP), la tâche d'impression ayant une structure hiérarchique comportant une pluralité de niveaux hiérarchiques et comprenant des éléments à la pluralité de niveaux hiérarchiques,
le procédé étant **caractérisé en ce qu'**il comprend en outre les étapes consistant à :
analyser la tâche d'impression acquise et estimer, sur la base d'un type de l'application d'impression de données variables ou du nombre d'éléments à chaque niveau hiérarchique qui sont obtenus par l'analyse, le niveau hiérarchique parmi la pluralité de niveaux hiérarchiques qui est un niveau d'enregistrement correspondant à un enregistrement servant d'unité de répétition de données variables ;
commander un dispositif d'affichage pour qu'il affiche un écran de définition de niveau d'enregistrement qui comprend un objet de sélection de niveau d'enregistrement permettant de recevoir, d'un utilisateur, une sélection d'un niveau d'enregistrement d'une pluralité de niveaux hiérarchiques comprenant le niveau hiérarchique estimé en tant que niveau d'enregistrement, où un écran initial de l'écran de définition de niveau d'enregistrement est dans un état dans lequel le niveau hiérarchique estimé en tant que niveau d'enregistrement est sélectionné dans l'objet de sélection de niveau d'enregistrement ;
acquérir un niveau d'enregistrement sélectionné par le biais de l'objet de sélection de niveau d'enregistrement dans l'écran de définition de niveau d'enregistrement ; et
notifier, à un moyen de post-traitement du niveau d'enregistrement acquis, qu'il convient d'exécuter un post-traitement de la tâche d'impression dans des unités du niveau d'enregistrement sélectionné.

7. Programme qui, lorsqu'il est exécuté sur un dispositif, amène le dispositif à exécuter le procédé selon la revendication 6.

8. Support d'informations contenant en mémoire un programme selon la revendication 7.
